# EUROPEAN PATENT SPECIFICATION

(11) **EP 2 133 132 B1**
(45) Date of publication and mention of the grant of the patent: **14.10.2015**
(21) Application number: 08703630.7
(22) Date of filing: 22.01.2008
(51) Int. Cl.: B01D 39/20, B01D 46/00, F01N 3/02, B01D 46/24, F01N 3/022

(54) **HONEYCOMB SEGMENT AND HONEYCOMB STRUCTURE**
WABENSEGMENT UND WABENSTRUKTUR
SEGMENT DE NID D'ABEILLES ET STRUCTURE EN NID D'ABEILLES

(30) Priority: 30.03.2007 JP 2007091636
(43) Date of publication of application: 16.12.2009
(73) Proprietor: NGK Insulators, Ltd., Nagoya-shi, Aichi 467-8530 (JP)
(72) Inventor: MIZUTANI, Takashi, Nagoya-shi Aichi 467-8530 (JP)
(74) Representative: Naylor, Matthew John
(86) International application number: PCT/JP2008/050786
(87) International publication number: WO 2008/126433

(56) References cited:
- EP-A1- 1 498 179
- EP-A1- 1 676 620
- EP-A1- 1 862 279
- WO-A2-2005/079165
- JP-A- 2001 206 780
- JP-A- 2001 334 114
- JP-A- 2005 125 209
- JP-A- 2005 270 969
- JP-A- 2006 281 134
- JP-A- 2006 281 134

## Description

### Technical Field

The present invention relates to a honeycomb segment and a honeycomb structure.

### Background Art

There are growing requirements for removing particulate matter and harmful substances in exhaust gas from an internal engine, boiler and the like in consideration of an influence on environment. In particular, regulations regarding removal of particulate matter (hereinbelow sometimes referred to as "PM") discharged from a diesel engine tend to be strengthened worldwide. Therefore, attention is paid to the use of a honeycomb structure as a trapping filter (hereinbelow sometimes referred to as a "DPF") for removing PM, and various kinds of systems have been proposed. In the aforementioned DPF, generally, a plurality of cells functioning as fluid passages and having a quadrangular cross-sectional shape are formed by porous partition walls, and the porous partition walls constituting the cells function as a filter by alternately plugging the cells. Here, the cross-sectional shape means a shape of a cross section when the cell is cut along a plane perpendicular to the longitudinal direction of the cell.

In DPF, exhaust gas or the like containing particulate matter is allowed to flow in from one end portion side, and, after particulate matter is filtrated by the partition walls, purified gas is discharged from the other end portion side. According to the inflow of the exhaust gas, particulate matter contained in exhaust gas deposits in the aforementioned one end portion (end portion on the exhaust gas inflow side) to cause a problem of clogging of cells. This is prone to be caused in the case that a large amount of particulate matter in exhaust gas is contained or in a cold district. Such clogging has a problem of rapidly increasing pressure loss in DPF. In order to suppress such cell clogging, there has been proposed a structure having different cross-sectional areas between the cells (inflow side cells) opening in the end portion where the aforementioned exhaust gas flows in and the cells (outflow cells) opening on the other end portion (end portion where the exhaust gas flows out). Here, the cross-sectional area means the area of the cross section cut along a plane perpendicular to the longitudinal direction of a cell.

However, when the cross-sectional area of the inflow side cells and the cross-sectional area of the outflow side cells of a honeycomb filter having the cells having a quadrangular cross-sectional shape are made different from each other, the partition walls forming the cells becomes thin in a part of the portion where partition walls intersect (hereinbelow, sometimes referred to as an "intersection point portion"), having a problem of low strength. Therefore, when PM deposits in DPF, post-injection is performed for combustion-removal of the PM. At this time, stress concentrates in a part of the thin intersection portion, and there arises a problem of easy breakage. Here, the portion where partition walls intersects means a portion belonging to both the intersecting partition walls in a cross section cut along a plane perpendicular to the longitudinal direction of a honeycomb filter. For example, in the case that partition walls linearly extending in the above cross section and having the same thickness cross each other, it means the square range in the intersection portion.

In addition, there is proposed a honeycomb filter having the inflow side cells having a larger cross-sectional area and the outflow side cells having a smaller cross-sectional area, where the cross-sectional shape having a larger cross-sectional area is octagonal obtained by linearly cutting the corners of a quadrangular shape (see, e.g. Patent Document 1).

On the other hand, in a lattice honeycomb structure there has been disclosed a configuration where a cell opening percentage in a cross-sectional shape in a direction perpendicular to the central axis increases continuously or in stages from the central portion to the outer peripheral portion (see, e.g., Patent Document 2).

In addition, the aforementioned honeycomb filter having an end of the honeycomb structure plugged is disclosed as a honeycomb filter hardly having a crack and excellent in durability (see, e.g., Patent Document 3).

Further, there is disclosed a honeycomb structure having small pressure loss and excellent in durability against thermal stress loss with suppressing decreases in a reaction rate, a purification efficiency, and a regeneration efficiency (see, e.g., Patent Document 4).

However, in a honeycomb filter having different cross-sectional areas between the inflow side cells and the outflow side cells, though the thin state of a part of the aforementioned intersection point portion is slightly resolved by making a cross sectional shape of the cells octagonal, a problem of low strength still remains. In the quadrangular cells having a quadrangular cross section, the central portion serves as a compressed place by a heat spot generated upon combustion of deposited soot in the central portion of the cross section, and a crack caused by the generation of tensile stress generated in the outer peripheral portion apart from the heat spot. However, in the case that the cross-sectional shapes of the cells are quadrangular-octagonal, strain is generated even in a heat spot region. In the case of a unitarily formed honeycomb filter (honeycomb structure), a crack is prone to generate because the temperature difference between the center and the outer peripheral portion is large because of the far distance. In the case of a honeycomb segment bonded article, soot does not deposit, and the temperature difference between the center and the outer periphery of a segment is easily generated because each segment is surrounded by a bonding material having a large heat capacity, which easily generates a crack. Therefore, there has been desired a honeycomb structure where both the problem of cell clogging and the problem of low strength are solved.
Patent Document 1: French Patent Application Laid-Open No. 2789327 Specification
Patent Document 2: JP-A-2006-281134
Patent Document 3: JP-A-2003-254034
Patent Document 4: JP-A-2002-301325

### Disclosure of the Invention

The present invention aims to provide a honeycomb segment and a honeycomb structure where crack generation by generation of a heat spot due to the difference in thermal conductivity is inhibited and where the inflow side cells and the outflow side cells have different cross-sectional areas.
[1] It was found out that the above problems can be solved by formation in such a manner that an opening percentage of the first cells increases continuously or in stages from the first cell in the central portion in a cross section toward the first cell of the outer peripheral portion according to claim 1.
[2] The honeycomb segment according to the above [1], wherein a thickness of the partition walls present between the first cell and another first cell adjacent to the first cell decreases continuously or in stages from the central portion toward the outer peripheral portion.
[3] The honeycomb segment according to any one of the above [1] to [2], wherein the opening percentage of the first cells in the central portion is 60% or more and 96% or less with respect to the opening percentage of the first cells in the outer peripheral portion.
[4] The honeycomb segment according to any one of the above [1] to [3], wherein the thickness of the partition wall between the first cells in the central portion is 104% or more and 155% or less with respect to the thickness of the partition wall between the first cells in the outer peripheral portion.
[5] The honeycomb segment according to any one of the above [1] to [4], wherein the difference in opening percentage between the opening percentage of the first cells and the opening percentage of the second cells in the central portion is 60% or more and 96% or less with respect to the difference in opening percentage between the opening percentage of the first cells and the opening percentage of the second cells in the outer peripheral portion.
[6] A honeycomb structure according to claim 6.
[7] The honeycomb structure according to the above [6], wherein a thickness of the partition walls present between the first cell and another first cell adjacent to the first cell decreases continuously or in stages from the central portion toward the outer peripheral portion.
[8] The honeycomb structure according to any one of the above [6] to [7], wherein the opening percentage of the first cells in the central portion is 60% or more and 96% or less with respect to the opening percentage of the first cells in the outer peripheral portion.
[9] The honeycomb structure according to any one of the above [6] to [8], wherein the thickness of the partition wall between the first cells in the central portion is 104% or more and 155% or less with respect to the thickness of the partition wall between the first cells in the outer peripheral portion.
[10] The honeycomb structure according to any one of the above [6] to [8], wherein the difference in opening percentage between the opening percentage of the first cells and the opening percentage of the second cells in the central portion is 60% or more and 96% or less with respect to the difference in opening percentage between the opening percentage of the first cells and the opening percentage of the second cells in the outer peripheral portion.

Since an opening percentage of the first cells increases continuously or in stages from the first cell in a central portion in the cross section cut along the plane perpendicular to the longitudinal direction of the cells toward the first cells in a peripheral portion excluding incomplete cells in an outermost periphery in the cross section, it can inhibit crack generation by a heat spot generating due to the difference in thermal conductivity.

### Brief Description of the Drawings

[Fig. 1] Fig. 1 is a perspective view schematically showing a honeycomb structure of the embodiment 1 formed by bonding honeycomb segments of the present invention.
[Fig. 2] Fig. 2 is a perspective view schematically showing a honeycomb segment used for the honeycomb structure in Fig. 1.
[Fig. 3] Fig. 3 is an A-A cross-sectional view in Fig. 2.
[Fig. 4] Fig. 4 is a schematic view for explaining change in the opening percentage.
[Fig. 5] Fig. 5 is a schematic view for explaining the calculation definition of the opening percentage.
[Fig. 6] Fig. 6 is a perspective view schematically showing a honeycomb structure of the embodiment 2 of the present invention formed by unitary formation.
[Fig. 7] Fig. 7 is a schematic view for explaining change in the opening percentage of a honeycomb structure.

### Description of Reference Numerals

1: honeycomb structure, 2: honeycomb segment, 4: outer peripheral coat layer, 5: cell, 5a: first cell (large cell), 5b: second cell (small cell), 6: partition wall, 7: filler, 9: bonding material layer, 20: honeycomb structure

### Best Mode for Carrying out the Invention

Hereinbelow, embodiments of the present invention will be described with referring to drawings. However, the present invention is by no means limited to the following embodiments, and changes, modifications, and improvements may be made as long as they do not deviate from the scope of the present invention.

### (Embodiment 1)

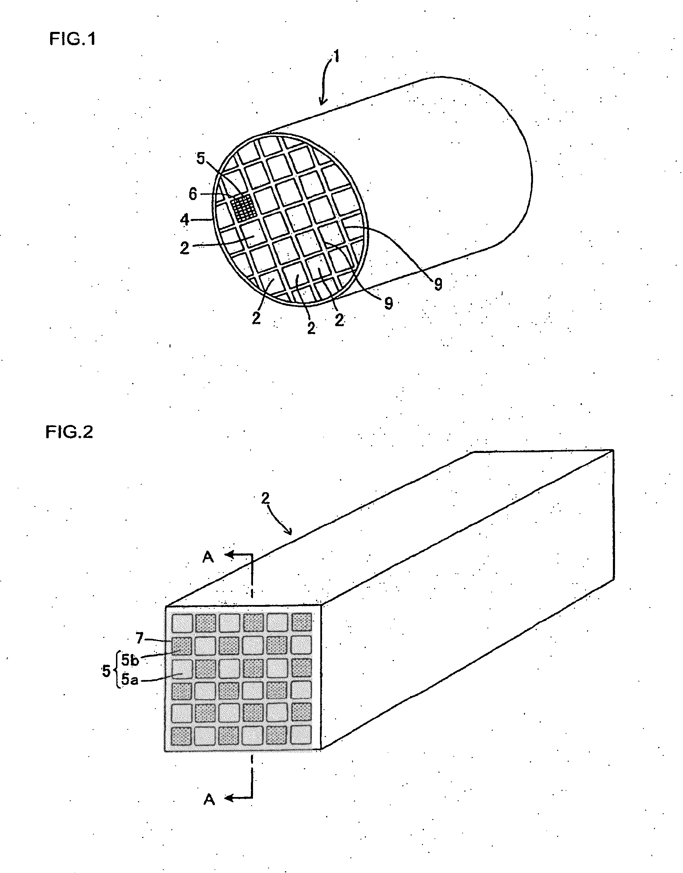

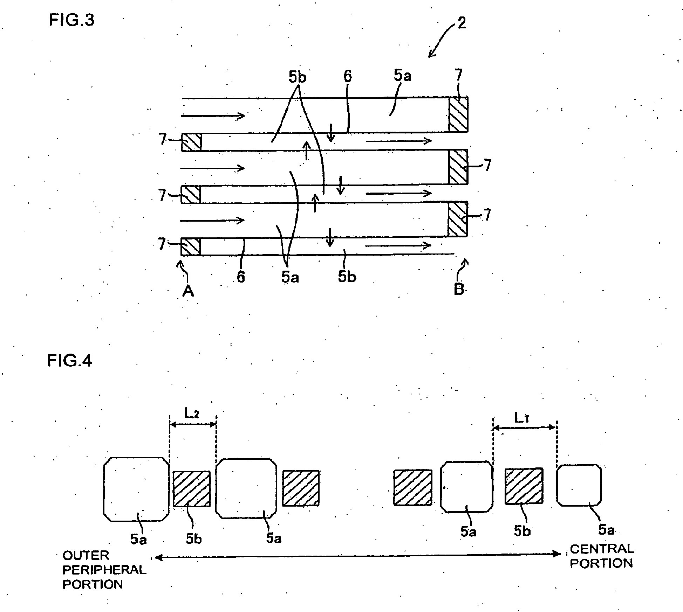

Fig. 1 is a perspective view schematically showing a honeycomb structure of the present invention. Fig. 2 is a perspective view schematically showing a honeycomb segment constituting the honeycomb structure in Fig. 1. Fig. 3 is an A-A cross-sectional view of a honeycomb segment in Fig. 2.

Here, the honeycomb segments 2 of the present invention have a shape constituting a part of the whole structure of the honeycomb structure 1 (honeycomb segment bonded article) as shown in Figs. 1 and 2 and constitute a honeycomb structure 1 by being assembled in a direction perpendicular to the central axis (longitudinal direction) of the honeycomb structure 1. The cells 5 are disposed in parallel with one another in the direction of the central axis of the honeycomb structure 1, and end portions of adjacent cells 5 are alternately plugged with a filler 7.

More specifically, the honeycomb segment 2 is formed to have a columnar shape having a quadrangular cross section and porous partition walls 6 separating and forming a plurality of cells 5 functioning as fluid passages, and two kinds of cells 5a, 5b having different cross-sectional areas in a cross section cut along a plane perpendicular to the longitudinal direction of the cells 5 are formed. The first cell (large cell) 5a has a larger cross-sectional area than the second cell (small cell) 5b in a cross section cut along a plane perpendicular to the longitudinal direction and is formed into an octagonal shape where the portions corresponding to the corner portions are cut off or a quadrangular shape where the portions corresponding to the corner portions are arc, while the second cells (small cell) 5b are formed into a quadrangular shape. In addition, the corner portion means a portion corresponding to the vertex and the periphery thereof in the case that the cross section is supposed to be a corresponding polygon (polygon formed by extending the linear portion).

The first cells 5a and the second cells 5b are alternately disposed in the first direction and the second direction perpendicular to the first direction in a cross section cut along a plane perpendicular to the longitudinal direction of the cells. In addition, as the cross-sectional view schematically shown in Fig. 3, the first cells 5a, where one end portion A is open and the other end portion B is plugged, and the second cells 5b, where one end portion A is plugged and the other end portion B is open, are alternately disposed to have a structure where a fluid flowing from the one end face A where the first cells 5a are open is passed through the partition walls 6 and allowed to flow out to the second cells 5b as a permeation fluid, which can be discharged from the other end portion B, where the second cells 5b are open.

Thus, in a honeycomb structure 1 of the embodiment 1, honeycomb segments 2 having opening percentages described below, where the first cells 5a and the second cells 5b have different cross-sectional areas (the first cells 5a have a larger cross-sectional area than the second cells 5b), are bonded. By allowing a fluid to flow in from the end portion (one end portion) A where the first cells 5a are open (the first cells 5a having a larger cross-sectional area serve as the inflow side cells), clogging of the first cells 5a opening in the one end portion (inflow side end portion) A can be inhibited when exhaust gas containing particulate matter is allowed to flow into the honeycomb structure 1.

As a material for the honeycomb segment 2, there is preferably used at least one kind selected from the group consisting of silicon carbide, silicon-silicon carbide based composite material, silicon nitride, cordierite, mullite, alumina, spinel, silicon carbide-cordierite based composite material, silicon-silicon carbide composite material, lithium aluminum silicate, aluminum titanate, and Fe-Cr-Al based metal from the viewpoints of strength and thermal resistance. Of these, silicon carbide or silicon-silicon carbide based composite material is preferable.

The honeycomb segment 2 can be manufactured by, for example, adding, to a material suitably selected from the aforementioned materials, a binder such as methyl cellulose, hydroxypropoxyl cellulose, hydroxyethyl cellulose, carboxylmethyl cellulose, and polyvinyl alcohol, a surfactant, water as a solvent, and the like to obtain kneaded clay having plasticity; subjecting the kneaded clay to extrusion forming into the aforementioned shape; drying the resultant article with microwaves, hot air, or the like: and sintering the resultant article.

As a filler 7 used for plugging the cells 5, the same material as that for the honeycomb segment 2 can be used. Plugging with the filler 7 can be performed by immersing an end face of the honeycomb segment 2 in slurried filler 7 in a state that the cells 5 not to be plugged are masked to fill the filler 7 into the open cells 5. Though the filling of the filler 7 may be performed after forming and before firing the honeycomb segment 2 or after firing the honeycomb segment 2, the filling is preferably performed before firing because only one firing step is required.

Using Fig. 4, an opening percentage of the honeycomb segment 2 will be described. As shown in Fig. 4, each honeycomb segment 2 subjected to bonding for forming a honeycomb structure 1 is formed in such a manner that an opening percentage of the first cells increases continuously or in stages from the first cell in a central portion in the cross section cut along the plane perpendicular to the longitudinal direction of the cells toward the first cells in a peripheral portion excluding incomplete cells in an outermost periphery in the cross section (Fig. 4 is drawn with exaggeration for explanation).

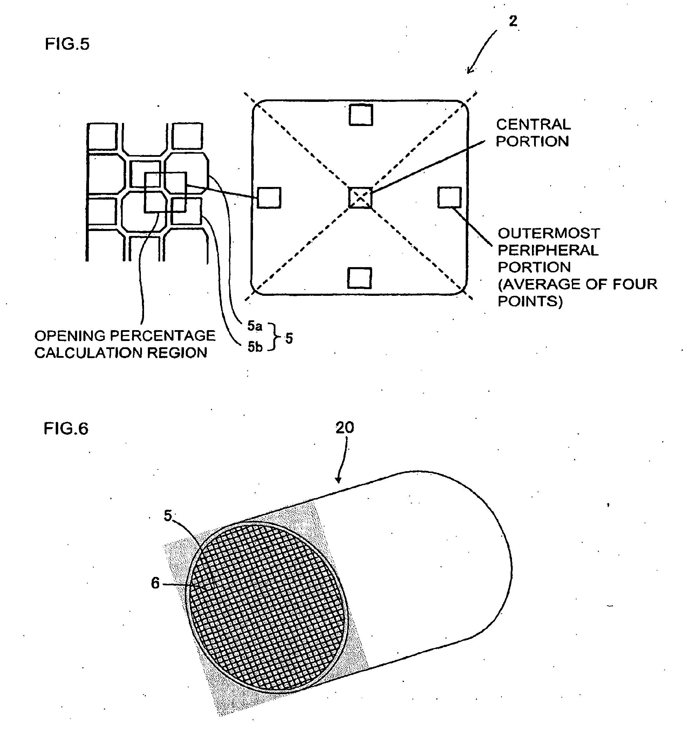

Here, as shown in Fig. 5, an opening percentage is defined as an average in an opening percentage calculation region of the 2 × 2 cells in the center of the honeycomb segment 2 regarding the central portion, and an average of four points in four directions at a 90-degree angle of 2 × 2 cells in the outermost periphery excluding incomplete cells in the outermost periphery regarding the outer peripheral portion. Regarding the cells between the central portion and the outer peripheral portion, calculation is performed with an average of adjacent 2 × 2 cells. As shown in Fig. 5, the opening percentage calculation region is a square region obtained by connecting the central portions of the adjacent 2 × 2 cells. The ratio of the area of the opening portions excluding the partition walls to the area of the square is defined as the opening percentage.

The segment 2 may be formed so that the opening percentage of the first cells 5a in the central portion is 60% or more and 96% or less with respect to the opening percentage of the first cells 5a in the outer peripheral portion. Thus, by making the opening percentage of the central portion small, strength improves, and crack generation due to strain generated upon combustion of deposited soot can be inhibited.

In addition, it is desirable that the difference between an opening percentage of the unplugged first cells 5a in the end portion A and an opening percentage of the unplugged second cells 5b in the end portion B increases continuously or in stages from the central portion to the outer peripheral portion.

More specifically, thickness of the partition walls present between the first cell 5a and another first cell 5a adjacent to the first cell 5a decreases continuously or in stages from the central portion to the outer peripheral portion. That is, as shown in Fig. 4, the partition wall thickness L1 is thicker than the partition wall thickness L2. Then, it is desirable that the thickness of the partition wall between the first cells in the central portion is 104% or more and 155% or less with respect to the thickness of the partition wall between the first cells in the outer peripheral portion.

It is further preferable that the difference in opening percentage between the opening percentage of the first cells and the opening percentage of the second cells in the central portion is 60% or more and 96% or less with respect to the difference in opening percentage between the opening percentage of the first cells and the opening percentage of the second cells in the outer peripheral portion.

Such formation improves strength against strain of the partition walls in the central portion, thereby inhibiting crack generation.

After manufacturing the honeycomb segment 2 as described above, the slurried bonding material layer 9 is applied on the outer peripheral face of the honeycomb segment 2, a plurality of honeycomb segments 2 are assembled into a predetermined solid shape (whole structure of the honeycomb structure 1), followed by pressure bonding in this assembled state and then dried by heating. Thus, a bonded article where a plurality of honeycomb segments 2 is unitarily bonded is manufactured.

As shown in, for example, Fig. 1, a honeycomb structure 1 obtained in the present invention is provided with a honeycomb segment bonded article where a plurality of honeycomb segments 2 are unitarily bonded at bonding faces thereof by means of a bonding layer and an outer peripheral coat layer 4 covering the outer peripheral faces of the honeycomb segment bonded article and has a structure where a plurality of cells 5 functioning as fluid passages are disposed in parallel with one another in the central axial direction.

Incidentally, the bonding material layer 9 used in the present invention is applied on outer peripheral faces of the honeycomb segments 2 and functions to bond the honeycomb segments 2. The formation of the bonding material layer 9 may be performed by applying a slurried bonding material layer 9 on the outer peripheral face and assembling a plurality of honeycomb segment 2 into a predetermined solid shape (whole structure of the honeycomb structure 1), followed by pressure bonding and then drying by heating. In this case, the application may be performed on the outer peripheral faces of each of adjacent honeycomb segments 2. However, in the case of mutually adjacent honeycomb segments 2, application may be performed on only one of the corresponding outer peripheral faces.

Suitable examples of the bonding material layer 9 used in the present invention include bonding material layers constituted of inorganic fibers, an inorganic binder, an organic binder, and inorganic particles. Specifically, examples of the inorganic fibers include oxide fibers of aluminosilicate and alumina and other fibers (e.g., SiC fibers). Examples of the inorganic binder include silica sol, alumina sol, and clay. Examples of the organic binder include polyvinyl alcohol (PVA), carboxymethyl cellulose (CMC), and methyl cellulose (MC). Examples of the inorganic particles include ceramics such as silicon carbide, silicon nitride, cordierite, alumina, and mullite.

The honeycomb structure 1 formed as described above is formed as a bonded article of honeycomb segments 2, where, as shown in Fig. 3, the first cells (inflow cells) 5a are open on the left end portion side and plugged with the filler 7 on the right end portion side, while the other cells (outflow cells) 5b adjacent to the first cells are plugged with the filler 7 on the left end portion side and open on the right end portion side. By such plugging, as shown in Fig. 2, each end portion of the honeycomb segment 2 has a checkerwise pattern. In the case that a honeycomb structure 1 where such honeycomb segments 2 are bonded is disposed in an exhaust gas exhaust system, exhaust gas flows into the cells 5 of each honeycomb segment 2 from the left side in Fig. 3 and moves toward the right side. When the exhaust gas passes through the partition walls 6, particulate matter (particulates) containing soot in the exhaust gas is trapped by the partition walls 6. Thus, exhaust gas can be purified. By the trapping, since pressure loss increases because particulate matter (particulates) containing soot deposits inside the honeycomb segment 2 with the passage of time, regeneration by combusting soot and the like is performed. There, since honeycomb segments 2 each having a changed opening percentage are bonded, a crack is hardly generated with thermal resistance.

### (Embodiment 2)

The embodiment 2 of the present invention will be described. Fig. 6 is a perspective view schematically showing a honeycomb structure 20 of the present invention. The honeycomb structure 20 is unitarily formed, the cells 5 are disposed in parallel with one another in the central axial direction of the honeycomb structure 20, and the end portions of adjacent cells 5 are alternately plugged with the filler 7.

More specifically, a honeycomb structure 20 is formed into a columnar shape and provided with porous partition walls 6 separating and forming a plurality of cells 5 functioning as fluid passages, and two kinds of cells 5a and 5b having different cross-sectional areas in a cross section cut along a plane perpendicular to the longitudinal direction of the cells are formed. Like the embodiment 1, the first cell (large cell) 5a has a larger cross-sectional area in a cross section cut along a plane perpendicular to the longitudinal direction of the cell than that of the second cell (small cell) 5b and has an octagonal shape where the portions corresponding to the corner portions are cut off or a quadrangular shape where the portions corresponding to the corner portions have an arc shape, and the second cell (small cell) 5b has a quadrangular shape.

Since the materials for the honeycomb structure 2, the filler 7 used for plugging, and the like, and the other details are almost the same as in the embodiment 1 except for unitary formation, the description will be omitted.

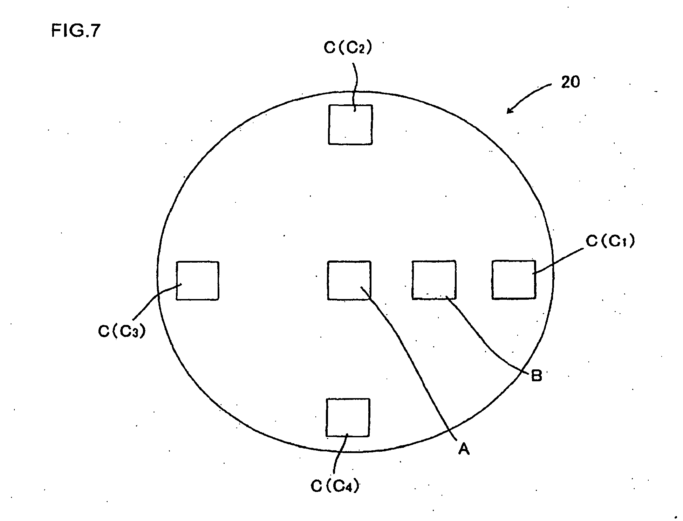

As shown in Fig. 7, the honeycomb structure 1 of the embodiment 2 is formed in such a manner that an opening percentage of the first cells 5a increases continuously or in stages from the first cell 5a in a central portion in the cross section toward the first cells 5b in a peripheral portion excluding incomplete cells in an outermost periphery in the cross section.

Here, an opening percentage is defined as an average in an opening percentage calculation region A of the 2 × 2 cells in the center of the honeycomb segment 20 regarding the central portion, and an average of four points (opening percentage calculation regions C₁ to C₄) in four directions at a 90-degree angle of 2 × 2 cells in the outermost periphery excluding incomplete cells in the outermost periphery regarding the outer peripheral portion. Regarding the cells between the central portion and the outer peripheral portion, calculation is performed with an average of adjacent 2 × 2 cells (opening percentage calculation region B). The opening percentage calculation regions are taken in the same manner as in Fig. 5.

It is desirable that the opening percentage of the first cells 5a in the central portion is 60% or more and 96% or less with respect to the opening percentage of the first cells 5a in the outer peripheral portion.

It is desirable that the difference between the opening percentage of the first cells on an unplugged end portions and the opening percentage of the second cells on an unplugged end portions increases continuously or in stages from the central portion toward the outer peripheral portion.

More specifically, thickness of the partition walls present between the first cell 5a and another first cell 5a adjacent to the first cell 5a decreases continuously or in stages from the central portion to the outer peripheral portion. That is, it is desirable that the thickness of the partition wall between the first cells 5a in the central portion is 104% or more and 155% or less with respect to the thickness of the partition wall between the first cells in the outer peripheral portion.

It is further preferable that the difference in opening percentage between the opening percentage of the first cells 5a and the opening percentage of the second cells 5b in the central portion is 60% or more and 96% or less with respect to the difference in opening percentage between the opening percentage of the first cells 5a and the opening percentage of the second cells 5b in the outer peripheral portion.

The honeycomb structure 20 unitarily formed in such a manner that the first cells (inflow cells) 5a and the second cells (outflow cells) 5b have different cross-sectional areas and that the first cells 5a have different opening percentages between the central portion and the outer peripheral portion has improved strength against strain of the partition walls in the central portion, thereby inhibiting crack generation.

### Example

Hereinbelow, the present invention will be described in more detail on the basis of Examples. However, the present invention is by no means limited to these Examples.

A regeneration test was performed using a 2.0 L diesel engine. The DPF had a diameter of 144 mm, a length of 152 mm, and a porosity of 50%. Oxidation catalysts were mounted in the upstream. A predetermined amount of soot was deposited in the DPF, and post-injection was performed in a state of 1700 rpm × 20 Nm to raise the temperature of the engine exhaust gas up to 690°C. When the pressure loss of the DPF started decreasing, the state was shifted to the idle state. By shifting to the idle state, oxygen concentration was raised. By reducing the exhaust gas flow, the DPF inner temperature was raised for regeneration of the DPF. When the inside of the DPF has very high temperature, a crack may be caused in the DPF outlet end face. Therefore, attention has to be paid.

As a Comparative Example, a different DPF was prepared. The exhaust gas temperature at the DPF inlet was constant, and the amount of the soot deposited in the DPF was increased from 8 g/L by 0.2 g/L for comparison and evaluation of the soot deposit amount when a crack is caused in the outlet end face.

DPFs having the following different structures were prepared. In comparison with the outer peripheral portion, (a) samples having a small opening percentage in the central portion (Examples 1-1 to 1-10), (b) samples having a large partition wall thickness in central portion (Examples 2-1 to 2-13), (c) samples having a high cell density in the central portion (Examples 3-1 to 3-14), and (d) samples having a small ratio of the first cell-opening percentage to the second cell-opening percentage in the central portion (Examples 4-1 to 4-10).

Using the above samples, the soot amount deposited in the DPF was increased with keeping exhaust gas temperature in the inlet of the DPF constant to compare and evaluate the soot deposition amount when a crack is caused in the outlet end face. The conditions and results of the DPFs manufactured are shown in Tables 1 to 4. "-" in Examples in the tables means the same value as in Comparative Example in Table 1.

**[Table 1]**

| | Outer peripheral portion | | | | Ratio of center to outer periphery | | | | Central portion | | | |
|---|---|---|---|---|---|---|---|---|---|---|---|---|
| | Opening percentage [%] | Partition wall thickness [mil] | Cell density [cpsi] | Ratio of first to second opening percentage | Opening percentage | Partition wall thickness | Cell density | Ratio of first to second opening percentage | Partition wall thickness | Partition wall thickness | Cell density | Ratio of first to second opening percentage |
| Comparative Ex. | 69.1 | 10.0 | 300 | 1.49 | 1.00 | 1.00 | 1.00 | 1.00 | 69.1 | 10.0 | 300 | 1.49 |
| Example 1-1 | 69.1 | 10.0 | 300 | 1.49 | 0.97 | - | - | - | 67.0 | - | - | - |
| Example 1-2 | 69.1 | 10.0 | 300 | 1.49 | 0.96 | - | - | - | 66.3 | - | - | - |
| Example 1-3 | 69.1 | 10.0 | 300 | 1.49 | 0.90 | - | - | - | 62.2 | - | - | - |
| Example 1-4 | 69.1 | 10.0 | 300 | 1.49 | 0.85 | - | - | - | 58.7 | - | - | - |
| Example 1-5 | 69.1 | 10.0 | 300 | 1.49 | 0.80 | - | - | - | 55.3 | - | - | - |
| Example 1-6 | 69.1 | 10.0 | 300 | 1.49 | 0.75 | - | - | - | 51.8 | - | - | - |
| Example 1-7 | 69.1 | 10.0 | 300 | 1.49 | 0.70 | - | - | - | 48.4 | - | - | - |
| Example 1-8 | 69.1 | 10.0 | 300 | 1.49 | 0.65 | - | - | - | 44.9 | - | - | - |
| Example 1-9 | 69.1 | 10.0 | 300 | 1.49 | 0.60 | - | - | - | 41.5 | - | - | - |
| Example 1-10 | 69.1 | 10.0 | 300 | 1.49 | 0.55 | - | - | - | 38.0 | - | - | - |
| Example 2-1 | 69.1 | 10.0 | 300 | 1.49 | - | 1.03 | - | - | - | 10.3 | - | - |
| Example 2-2 | 69.1 | 10.0 | 300 | 1.49 | - | 1.04 | - | - | - | 10.4 | - | - |
| Example 2-3 | 69.1 | 10.0 | 300 | 1.49 | - | 1.10 | - | - | - | 11.0 | - | - |
| Example 2-4 | 69:1 | 10.0 | 300 | 1.49 | - | 1.15 | - | - | - | 11.5 | - | - |
| Example 2-5 | 69.1 | 10.0 | 300 | 1.49 | - | 1.20 | - | - | - | 12.0 | - | - |
| Example 2-6 | 69.1 | 10.0 | 300 | 1.49 | - | 1.25 | - | - | - | 12.5 | - | - |
| Example 2-7 | 69.1 | 10.0 | 300 | 1.49 | - | 1.30 | - | - | - | 13.0 | - | - |
| Example 2-8 | 69.1 | 10.0 | 300 | 1.49 | - | 1.35 | - | - | - | 13.5 | - | - |
| Example 2-9 | 69.1 | 10.0 | 300 | 1.49 | - | 1.40 | - | - | - | 14.0 | - | - |
| Example 2-10 | 69.1 | 10.0 | 300 | 1.49 | - | 1.45 | - | - | - | 14.5 | - | - |
| Example 2-11 | 69.1 | 10.0 | 300 | 1.49 | - | 1.49 | - | - | - | 14.9 | - | - |
| Example 2-12 | 69.1 | 10.0 | 300 | 1.49 | - | 1.55 | - | - | - | 15.5 | - | - |
| Example 2-13 | 69.1 | 10.0 | 300 | 1.49 | - | 1.58 | - | - | - | 15.8 | - | - |

**[Table 2]**

| No. | Soot amount upon crack generation [g/L] | Pressure loss due to soot deposition [kPa] | Judgment |
|---|---|---|---|
| Comparative Ex. | 8.0 | 7.8 | - |
| Example 1-1 | 8.0 | 7.9 | Bad |
| Example 1-2 | 8.1 | 8.0 | Good |
| Example 1-3 | 8.4 | 8.3 | Good |
| Example 1-4 | 8.6 | 8.4 | Good |
| Example 1-5 | 8.9 | 8.6 | Good |
| Example 1-6 | 9.2 | 8.7 | Good |
| Example 1-7 | 9.6 | 8.9 | Good |
| Example 1-8 | 10.0 | 9.2 | Good |
| Example 1-9 | 10.2 | 9.7 | Good |
| Example 1-10 | 10.4 | 10.3 | Bad |
| Example 2-1 | 8.0 | 7.8 | Bad |
| Example 2-2 | 8.2 | 7.9 | Good |
| Example 2-3 | 8.4 | 7.9 | Good |
| Example 2-4 | 8.6 | 8.0 | Good |
| Example 2-5 | 9.0 | 8.0 | Good |
| Example 2-6 | 9.2 | 8.1 | Good |
| Example 2-7 | 9.5 | 8.3 | Good |
| Example 2-8 | 9.8 | 8.4 | Good |
| Example 2-9 | 10.1 | 8.6 | Good |
| Example 2-10 | 10.3 | 8.8 | Good |
| Example 2-11 | 10.5 | 9.1 | Good |
| Example 2-12 | 10.8 | 9.6 | Good |
| Example 2-13 | 10.9 | 10.2 | Bad |

**[Table 3]**

| | Outer peripheral portion | | | | Ratio of center to outer periphery | | | | Central portion | | | |
|---|---|---|---|---|---|---|---|---|---|---|---|---|
| | Opening percentage [%] | Partition wall thickness [mil] | Cell density [cpsi] | Ratio of first to second opening percentage | Opening percentage | Partition wall thickness | Cell density | Ratio of first to second opening percentage | Partition wall thickness | Partition wall thickness | Cell density | Ratio of first to second opening percentage |
| Example 3-1 | 69.1 | 10.0 | 300 | 1.49 | - | - | 1.03 | - | - | - | 309 | - |
| Example 3-2 | 69.1 | 10.0 | 300 | 1.49 | - | - | 1.04 | - | - | - | 312 | - |
| Example 3-3 | 69.1 | 10.0 | 300 | 1.49 | - | - | 1.10 | - | - | - | 330 | - |
| Example 3-4 | 69.1 | 10.0 | 300 | 1.49 | - | - | 1.15 | - | - | - | 345 | - |
| Example 3-5 | 69.1 | 10.0 | 300 | 1.49 | - | - | 1.20 | - | - | - | 360 | - |
| Example 3-6 | 69.1 | 10.0 | 300 | 1.49 | - | - | 1.25 | - | - | - | 375 | - |
| Example 3-7 | 69.1 | 10.0 | 300 | 1.49 | - | - | 1.30 | - | - | - | 390 | - |
| Example 3-8 | 69.1 | 10.0 | 300 | 1.49 | - | - | 1.35 | - | - | - | 405 | - |
| Example 3-9 | 69.1 | 10.0 | 300 | 1.49 | - | - | 1.40 | - | - | - | 420 | - |
| Example 3-10 | 69.1 | 10.0 | 300 | 1.49 | - | - | 1.45 | - | - | - | 435 | - |
| Example 3-11 | 69.1 | 10.0 | 300 | 1.49 | - | - | 1.47 | - | - | - | 441 | - |
| Example 3-12 | 69.1 | 10.0 | 300 | 1.49 | - | - | 1.50 | - | - | - | 450 | - |
| Example 3-13 | 69.1 | 10.0 | 300 | 1.49 | - | - | 1.52 | - | - | - | 456 | - |
| Example 3-14 | 69.1 | 10.0 | 300 | 1.49 | | - | 1.55 | - | - | - | 465 | - |
| Example 4-1 | 69.1 | 10.0 | 300 | 1.49 | - | - | | 0.97 | - | - | - | 1.44 |
| Example 4-2 | 69.1 | 10.0 | 300 | 1.49 | - | - | - | 0.96 | - | - | - | 1.43 |
| Example 4-3 | 69.1 | 10.0 | 300 | 1.49 | - | - | - | 0.90 | - | - | - | 1.34 |
| Example 4-4 | 69.1 | 10.0 | 300 | 1.49 | - | - | - | 0.85 | - | - | - | 1.27 |
| Example 4-5 | 69.1 | 10.0 | 300 | 1.49 | - | - | - | 0.80 | - | - | - | 1.19 |
| Example 4-6 | 69.1 | 10.0 | 300 | 1.49 | - | - | - | 0.75 | - | - | - | 1.12 |
| Example 4-7 | 69.1 | 10.0 | 300 | 1.49 | - | - | - | 0.70 | - | - | - | 1.04 |
| Example 4-8 | 69.1 | 10.0 | 300 | 1.49 | - | - | - | 0.65 | - | - | - | 0.97 |
| Example 4-9 | 69.1 | 10.0 | 300 | 1.49 | - | - | - | 0.60 | - | - | - | 0.89 |
| Example 4-10 | 69.1 | 10.0 | 300 | 1.49 | - | - | - | 0.55 | - | - | - | 0.82 |

**[Table 4]**

| No. | Soot amount upon crack generation [g/L] | Pressure loss due to soot deposition [kPa] | Judgment |
|---|---|---|---|
| Example 3-1 | 7.9 | 7.9 | Bad |
| Example 3-2 | 8.1 | 8.0 | Good |
| Example 3-3 | 8.3 | 8.2 | Good |
| Example 3-4 | 8.5 | 8.2 | Good |
| Example 3-5 | 8.7 | 8.4 | Good |
| Example 3-6 | 9.1 | 8.5 | Good |
| Example 3-7 | 9.4 | 8.6 | Good |
| Example 3-8 | 9.8 | 8.9 | Good |
| Example 3-9 | 10.2 | 9.2 | Good |
| Example 3-10 | 10.4 | 9.4 | Good |
| Example 3-11 | 10.7 | 9.5 | Good |
| Example 3-12 | 10.9 | 9.8 | Good |
| Example 3-13 | 11.1 | 10.3 | Bad |
| Example 3-14 | 11.2 | 10.7 | Bad |
| Example 4-1 | 8.0 | 7.8 | Bad |
| Example 4-2 | 8.1 | 7.9 | Good |
| Example 4-3 | 8.3 | 8.1 | Good |
| Example 4-4 | 8.5 | 8.3 | Good |
| Example 4-5 | 8.7 | 8.5 | Good |
| Example 4-6 | 8.9 | 8.7 | Good |
| Example 4-7 | 9.2 | 9.0 | Good |
| Example 4-8 | 9.4 | 9.2 | Good |
| Example 4-9 | 9.7 | 9.8 | Good |
| Example 4-10 | 9.8 | 10.4 | Bad |

The soot deposition amount when a crack was generated increased (a) as the opening percentage in the central portion decreased, (b) as the partition wall thickness in the central portion increased, (c) as the cell density in the central portion increased, and (d) as the ratio of the opening percentage of the first cells to the opening percentage of the second cells in the central portion decreased. In Examples 1-1, 2-1, 3-1, and 4-1, the soot amount upon crack generation was 8.0 g/L or less as in Comparative Example, and the judgment of "bad" was delivered.

Next, using the same engine, increase in pressure loss in the soot deposition step of each of the above samples was monitored to evaluate the samples for pressure loss upon 4 g/L soot deposition.

The pressure loss upon soot deposition gradually increased, while the soot deposition amount upon crack generation increased. The reason why the pressure loss increases is that a membrane area where soot can deposit decreases upon evaluating a unitary article (a) as the opening percentage in the central portion decreases, (b) as the partition wall thickness in the central portion increases, (c) as the cell density in the central portion increases, and (d) as the ratio of the opening percentage of the first cells to the opening percentage of the second cells in the central portion decreases; which increases the soot deposition amount per unit deposition to raise wall-passing pressure loss including a soot layer. In Examples 1-10, 2-13, 3-13, 3-14, and 4-10, pressure loss exceeded 10 kPa. Therefore, the judgment was bad.

### Industrial Applicability

A honeycomb structure of the present invention is useful as a trapping filter for exhaust gas, for example, as a diesel particulate filter (DPF) for trapping and removing particulate matter (particulates) contained in exhaust gas from a diesel engine, or the like.

## Claims

1. A honeycomb segment (2) comprising porous partition walls (6) separating and forming a plurality of cells (5) functioning as fluid passages and having a structure where first cells (5a) each having an open end portion on one side and a plugged end portion on the other side and second cells (5b) each having a plugged end portion on the one side and an open end portion on the other side are alternately disposed so that the fluid flowing from the end portion on the one side where the first cells (5a) are open may pass through the partition walls (6) and flow out into the second cells (5b) as a permeated fluid, and the permeated fluid can flow out from the end face on the other side where the second cells (5b) are open;
wherein the first cell (5a) has a larger cross-sectional area than the second cell (5b) in a cross section cut along a plane perpendicular to the longitudinal direction,
the first cells (5a) and the second cells (5b) are alternately disposed in a first direction and a second direction perpendicular to the first direction in a cross section cut along a plane perpendicular to a longitudinal direction of the cells (5), and
an opening percentage of the first cells (5a) increases continuously or in stages from the first cells (5a) in a central portion in the cross section cut along the plane perpendicular to the longitudinal direction of the cells (5) toward the first cells (5a) in a peripheral portion excluding incomplete cells in an outermost periphery in the cross section;
wherein the difference between the opening percentage of the unplugged first cells (5a) in an unplugged end portion and the opening percentage of the second cells (5b) in an unplugged end portion increases continuously or in stages from the central portion toward the outer peripheral portion.

2. The honeycomb segment (2) according to Claim 1, wherein a thickness of the partition walls (6) present between the first cell (5a) and another first cell (5a) adjacent to the first cell (5a) decreases continuously or in stages from the central portion toward the outer peripheral portion.

3. The honeycomb segment (2) according to claim 1 or claim 2, wherein the opening percentage of the first cells (5a) in the central portion is 60% or more and 96% or less with respect to the opening percentage of the first cells (5a) in the outer peripheral portion.

4. The honeycomb segment (2) according to any one of Claims 1 to 3, wherein the thickness of the partition wall (6) between the first cells (5a) in the central portion is 104% or more and 155% or less with respect to the thickness of the partition wall (6) between the first cells (5a) in the outer peripheral portion.

5. The honeycomb segment (2) according to any one of Claims 1 to 4, wherein the difference in opening percentage between the opening percentage of the first cells (5a) and the opening percentage of the second cells (5b) in the central portion is 60% or more and 96% or less with respect to the difference in opening percentage between the opening percentage of the first cells (5a) and the opening percentage of the second cells (5b) in the outer peripheral portion.

6. A honeycomb structure (20) unitarily formed and comprising porous partition walls (6) separating and forming a plurality of cells (5) functioning as fluid passages and having a structure where first cells (5a) each having an open end portion on one side and a plugged end portion on the other side and second cells (5b) each having a plugged end portion on the one side and an open end portion on the other side are alternately disposed so that the fluid flowing from the end portion on the one side where the first cells (5a) are open may pass through the partition walls (6) and flow out into the second cells (5b) as a permeated fluid, and the permeated fluid can flow out from the end face on the other side where the second cells (5b) are open;
wherein the first cell (5a) has a larger cross-sectional area than the second cell (5b) in a cross section cut along a plane perpendicular to the longitudinal direction,
the first cells (5a) and the second cells (5b) are alternately disposed in a first direction and a second direction perpendicular to the first direction in a cross section cut along a plane perpendicular to a longitudinal direction of the cells (5), and
an opening percentage of the first cells (5a) increases continuously or in stages from the first cell (5a) in a central portion in the cross section cut along the plane perpendicular to the longitudinal direction of the cells toward the first cells (5a) in a peripheral portion excluding incomplete cells in an outermost periphery in the cross section;
wherein the difference between the opening percentage of the first cells (5a) in an unplugged end portion and the opening percentage of the second cells (5b) in an unplugged end portion increases continuously or in stages from the central portion toward the outer peripheral portion.

7. The honeycomb structure (20) according to Claim 6, wherein a thickness of the partition walls (6) present between the first cell (5a) and another first cell (5a) adjacent to the first cell (5a) decreases continuously or in stages from the central portion toward the outer peripheral portion.

8. The honeycomb structure (20) according claim 6 or claim 7, wherein the opening percentage of the first cells (5a) in the central portion is 60% or more and 96% or less with respect to the opening percentage of the first cells (5a) in the outer peripheral portion.

9. The honeycomb structure (20) according to any one of Claims 6 to 8, wherein the thickness of the partition wall (6) between the first cells (5a) in the central portion is 104% or more and 155% or less with respect to the thickness of the partition wall (6) between the first cells (5a) in the outer peripheral portion.

10. The honeycomb structure (20) according to any one of Claims 6 to 9, wherein the difference in opening percentage between the opening percentage of the first cells (5a) and the opening percentage of the second cells (5b) in the central portion is 60% or more and 96% or less with respect to the difference in opening percentage between the opening percentage of the first cells (5a) and the opening percentage of the second cells (5b) in the outer peripheral portion.

## Patentansprüche

1. Wabensegment (2), welches poröse Trennwände (6) umfasst, die eine Vielzahl von Zellen (5) trennen und ausbilden, welche als Fluidkanäle fungieren und eine Struktur aufweisen, in der erste Zellen (5a), die jeweils eine offenen Endabschnitt auf einer Seite und einen verschlossenen Endabschnitt auf der anderen Seite aufweisen, und zweite Zellen (5b), die jeweils einen verschlossenen Endabschnitt auf der einen Seite und einen offenen Endabschnitt auf der anderen Seite aufweisen, abwechselnd angeordnet sind, sodass das Fluid, das vom Endabschnitt auf der einen Seite, auf der die ersten Zellen (5a) offen sind, durch die Trennwände (6) dringen kann und in die zweiten Zellen (5b) als ein permeiertes Fluid herausströmen kann, und das permeierte Fluid aus der Endstirnseite auf der anderen Seite, auf der die zweiten Zellen (5b) offen sind, herausströmen kann;
worin die erste Zelle (5a) in einem Querschnitt, der entlang einer Ebene senkrecht zur Längsrichtung geschnitten ist, eine größere Querschnittsfläche als die zweite Zelle (5b) aufweist,
die ersten Zellen (5a) und die zweiten Zellen (5b) in einem Querschnitt, der entlang einer Ebene senkrecht zu einer Längsrichtung der Zellen (5) geschnitten ist, abwechselnd in einer ersten Richtung und einer zweiten Richtung senkrecht zur ersten Richtung angeordnet sind, und
ein Öffnungsanteil der ersten Zellen (5a) stetig oder schrittweise von den ersten Zellen (5a) in einem zentralen Abschnitt in dem Querschnitt, der entlang der Ebene senkrecht zur Längsrichtung der Zellen (5) geschnitten ist, hin zu den ersten Zellen (5a) in einem Randabschnitt außer den unvollständigen Zellen in einem äußersten Rand im Querschnitt ansteigt;
worin die Differenz zwischen dem Öffnungsanteil der nicht verschlossenen ersten Zellen (5a) in einem nicht verschlossenen Endabschnitt und der Öffnungsanteil der zweiten Zellen (5b) in einem nicht verschlossenen Endabschnitt stetig oder schrittweise vom zentralen Abschnitt hin zum äußeren Randabschnitt ansteigt.

2. Wabensegment (2) nach Anspruch 1, worin eine Dicke der Trennwände (6), die zwischen der ersten Zelle (5a) und einer weiteren, an die erste Zelle (5a) angrenzenden, ersten Zelle (5a) besteht, stetig oder schrittweise vom zentralen Abschnitt hin zum äußeren Randabschnitt sinkt.

3. Wabensegment (2) nach Anspruch 1 oder Anspruch 2, worin der Öffnungsanteil der ersten Zellen (5a) im zentralen Abschnitt 60 % oder mehr und 96 % oder weniger in Bezug auf den Öffnungsanteil der ersten Zellen (5a) im äußeren Randabschnitt ist.

4. Wabensegment (2) nach einem der Ansprüche 1 bis 3, worin die Dicke der Trennwand (6) zwischen den ersten Zellen (5a) im zentralen Abschnitt 104 % oder mehr und 155 % oder weniger in Bezug auf die Dicke der Trennwand (6) zwischen den ersten Zellen (5a) im äußeren Randabschnitt ist.

5. Wabensegment (2) nach einem der Ansprüche 1 bis 4, worin die Differenz der Öffnungsanteile zwischen dem Öffnungsanteil der ersten Zellen (5a) und dem Öffnungsanteil der zweiten Zellen (5b) im zentralen Abschnitt 60 % oder mehr und 96 % oder weniger in Bezug auf die Differenz der Öffnungsanteile zwischen dem Öffnungsanteil der ersten Zellen (5a) und dem Öffnungsanteil der zweiten Zellen (5b) im äußeren Randabschnitt ist.

6. Wabenstruktur (20), die einstückig ausgebildet ist und poröse Trennwände (6) umfasst, die eine Vielzahl von Zellen (5) trennt und ausbildet, welche als Fluidkanäle fungieren und eine Struktur aufweisen, in der erste Zellen (5a), die jeweils einen offenen Endabschnitt auf einer Seite und einen verschlossenen Endabschnitt auf der anderen Seite aufweisen, und zweite Zellen (5b), die jeweils einen verschlossenen Endabschnitt auf der einen Seite und einen offenen Endabschnitt auf der anderen Seite aufweisen, abwechselnd angeordnet sind, sodass das Fluid, das vom Endabschnitt auf der einen Seite strömt, auf der die ersten Zellen (5a) offen sind, durch die Trennwände (6) treten kann und in die zweiten Zellen (5b) als ein permeiertes Fluid herausströmen kann, und das permeierte Fluid aus der Endstirnseite auf der anderen Seite, auf der die zweiten Zellen (5b) offen sind, herausströmen kann;
worin die erste Zelle (5a) in einem Querschnitt, der entlang einer Ebene senkrecht zur Längsrichtung geschnitten ist, eine größere Querschnittsfläche als die zweite Zelle (5b) aufweist,
die ersten Zellen (5a) und die zweiten Zellen (5b) in einem Querschnitt, der entlang einer Ebene senkrecht zu einer Längsrichtung der Zellen (5) geschnitten ist, abwechselnd in einer ersten Richtung und einer zweiten Richtung senkrecht zur ersten Richtung angeordnet sind, und
ein Öffnungsanteil der ersten Zellen (5a) stetig oder schrittweise von der ersten Zelle (5a) in einem zentralen Abschnitt in dem Querschnitt, der entlang der Ebene senkrecht zur Längsrichtung der Zellen (5) geschnitten ist, hin zu den ersten Zellen (5a) in einem Randabschnitt außer den unvollständigen Zellen in einem äußersten Rand im Querschnitt ansteigt;
worin die Differenz zwischen dem Öffnungsanteil der ersten Zellen (5a) in einem nicht verschlossenen Endabschnitt und dem Öffnungsanteil der zweiten Zellen (5b) in einem nicht verschlossenen Endabschnitt stetig oder schrittweise vom zentralen Abschnitt hin zum äußeren Randabschnitt ansteigt.

7. Wabenstruktur (20) nach Anspruch 6, worin eine Dicke der Trennwände (6), die zwischen der ersten Zelle (5a) und einer weiteren, an die erste Zelle (5a) angrenzenden ersten Zelle (5a) besteht, stetig oder schrittweise vom zentralen Abschnitt hin zum äußeren Randabschnitt sinkt.

8. Wabenstruktur (20) nach Anspruch 6 oder Anspruch 7, worin der Öffnungsanteil der ersten Zellen (5a) im zentralen Abschnitt 60 % oder mehr und 96 % oder weniger in Bezug auf den Öffnungsanteil der ersten Zellen (5a) im äußeren Randabschnitt ist.

9. Wabenstruktur (20) nach einem der Ansprüche 6 bis 8, worin die Dicke der Trennwand (6) zwischen den ersten Zellen (5a) im zentralen Abschnitt 104 % oder mehr und 155 % oder weniger in Bezug auf die Dicke der Trennwand (6) zwischen den ersten Zellen (5a) im äußeren Randabschnitt ist.

10. Wabenstruktur (20) nach einem der Ansprüche 6 bis 9, worin die Differenz der Öffnungsanteile zwischen dem Öffnungsanteil der ersten Zellen (5a) und dem Öffnungsanteil der zweiten Zellen (5b) im zentralen Abschnitt 60 % oder mehr und 96 % oder weniger in Bezug auf die Differenz der Öffnungsanteile zwischen dem Öffnungsanteil der ersten Zellen (5a) und dem Öffnungsanteil der zweiten Zellen (5b) im äußeren Randabschnitt ist.

## Revendications

1. Segment en nid d'abeille (2) comprenant des parois des séparations poreuses (6) séparant et formant une pluralité de cellules (5) servant de passages de fluide et ayant une structure dans laquelle les premières cellules (5a) ayant chacune une partie d'extrémité ouverte d'un côté et une partie d'extrémité bouchée de l'autre côté et des secondes cellules (5b) ayant chacune une partie d'extrémité bouchée d'un côté et une partie d'extrémité ouverte de l'autre côté, sont disposées de manière alternée de sorte que le fluide s'écoulant à partir de la partie d'extrémité du premier côté où les premières cellules (5a) sont ouvertes, peut passer à travers les parois de séparation (6) et sortir en s'écoulant dans les secondes cellules (5b) sous la forme d'un fluide filtré, et le fluide filtré peut sortir en s'écoulant par la face d'extrémité de l'autre côté où les secondes cellules (5b) sont ouvertes ;
dans lequel la première cellule (5a) a une surface transversale plus grande que la seconde cellule (5b) dans une coupe transversale le long d'un plan perpendiculaire à la direction longitudinale,
les premières cellules (5a) et les secondes cellules (5b) sont disposées de manière alternée dans une première direction et une seconde direction perpendiculaire à la première direction dans une section transversale coupée le long d'un plan perpendiculaire à une direction longitudinale des cellules (5), et
un pourcentage d'ouverture des premières cellules (5a) augmente de manière continue ou par palier à partir des premières cellules (5a) dans une partie centrale dans la section transversale coupée le long du plan perpendiculaire à la direction longitudinale des cellules (5) vers les premières cellules (5a) dans une partie périphérique excluant des cellules incomplètes dans une périphérie située le plus à l'extérieur dans la section transversale ;
dans laquelle la différence entre le pourcentage d'ouverture des premières cellules non bouchées (5a) dans une partie d'extrémité non bouchée et le pourcentage d'ouverture des secondes cellules (5b) dans une partie d'extrémité non bouchée augmente de manière continue ou par palier de la partie centrale vers la partie périphérique externe.

2. Segment en nid d'abeille (2) selon la revendication 1, dans lequel une épaisseur des parois de séparation (6) présentes entre la première cellule (5a) et une autre première cellule (5a) adjacente à la première cellule (5a) diminue de manière continue ou par palier, de la partie centrale vers la partie périphérique externe.

3. Segment en nid d'abeille (2) selon la revendication 1 ou la revendication 2, dans lequel le pourcentage d'ouverture des premières cellules (5a) dans la partie centrale est de 60% ou plus et 96% ou moins par rapport au pourcentage d'ouverture des premières cellules (5a) dans la partie périphérique externe.

4. Segment en nid d'abeille (2) selon l'une quelconque des revendications 1 à 3, dans lequel l'épaisseur de la paroi de séparation (6) entre les premières cellules (5a) dans la partie centrale est de 104% au plus et de 155% ou moins par rapport à l'épaisseur de la paroi de séparation (6) entre les premières cellules (5a) dans la partie périphérique externe.

5. Segment en nid d'abeille (2) selon l'une quelconque des revendications 1 à 4, dans lequel la différence du pourcentage d'ouverture entre le pourcentage d'ouverture des premières cellules (5a) et le pourcentage d'ouverture des secondes cellules (5b) dans la partie centrale est de 60% ou plus et de 96% ou moins par rapport à la différence du pourcentage d'ouverture entre le pourcentage d'ouverture des premières cellules (5a) et le pourcentage d'ouverture des secondes cellules (5b) dans la partie périphérique externe.

6. Structure en nid d'abeille (20) formée de manière unitaire et comprenant des parois de séparation poreuses (6) séparant et formant une pluralité de cellules (5) servant de passages de fluide et ayant une structure dans laquelle les premières cellules (5a) ayant chacune une partie d'extrémité ouverte d'un côté et une partie d'extrémité bouchée de l'autre côté et des secondes cellules (5b) ayant chacune une partie d'extrémité bouchée du premier côté et une partie d'extrémité ouverte de l'autre côté, sont disposées de manière alternée de sorte que le fluide s'écoulant à partir de la partie d'extrémité du premier côté où les premières cellules (5a) sont ouvertes, peut passer à travers les parois de séparation (6) et sortir en s'écoulant dans les secondes cellules (5b) sous la forme d'un fluide filtré, et le fluide filtré peut sortir en s'écoulant de la face d'extrémité de l'autre côté où les secondes cellules (5b) sont ouvertes ;
dans laquelle la première cellule (5a) a une plus grande surface transversale que la seconde cellule (5b) dans une section transversale coupée le long d'un plan perpendiculaire à la direction longitudinale,
les premières cellules (5a) et les secondes cellules (5b) sont disposées de manière alternée dans une première direction et une seconde direction perpendiculaire à la première direction dans une section transversale coupée le long d'un plan perpendiculaire à une direction longitudinale des cellules (5), et
un pourcentage d'ouverture des premières cellules (5a) augmente de manière continue ou par palier de la première cellule (5a) dans une partie centrale dans la section transversale découpée le long du plan perpendiculaire à la direction longitudinale des cellules vers les premières cellules (5a) dans une partie périphérique excluant les cellules incomplètes dans la périphérie située le plus à l'extérieur dans la section transversale ;
dans laquelle le différence entre le pourcentage d'ouverture des premières cellules (5a) dans une partie d'extrémité non bouchée et le pourcentage d'ouverture des secondes cellules (5b) dans une partie d'extrémité non bouchée augmente de manière continue ou par palier de la partie centrale vers la partie périphérique externe.

7. Structure en nid d'abeille (20) selon la revendication 6, dans laquelle une épaisseur des parois de séparation (6) présentes entre la première cellule (5a) et une autre première cellule (5a) adjacente à la première cellule (5a) diminue de manière continue ou par palier de la partie centrale vers la partie périphérique externe.

8. Structure en nid d'abeille (20) selon la revendication 6 ou 7, dans laquelle le pourcentage d'ouverture des premières cellules (5a) dans la partie centrale est de 60% ou plus et de 96% ou moins par rapport au pourcentage d'ouverture des premières cellules (5a) dans la partie périphérique externe.

9. Structure en nid d'abeille (20) selon l'une quelconque des revendications 6 à 8, dans laquelle l'épaisseur de la paroi de séparation (6) entre les premières cellules (5a) dans la partie centrale est de 104% ou plus et de 155% ou moins par rapport à l'épaisseur de la paroi de séparation (6) entre les premières cellules (5a) dans la partie périphérique externe.

10. Structure en nid d'abeille (20) selon l'une quelconque des revendications 6 à 9, dans laquelle la différence du pourcentage d'ouverture entre le pourcentage d'ouverture des premières cellules (5a) et le pourcentage d'ouverture des secondes cellules (5b) dans la partie centrale est de 60% ou plus et de 96% ou moins par rapport à la différence du pourcentage d'ouverture entre le pourcentage d'ouverture des premières cellules (5a) et le pourcentage d'ouverture des secondes cellules (5b) dans la partie périphérique externe.
